# EUROPEAN PATENT SPECIFICATION

(11) **EP 1 281 056 B1**
(45) Date of publication and mention of the grant of the patent: **09.03.2011**
(21) Application number: 99933328.9
(22) Date of filing: 08.06.1999
(51) Int. Cl.: G01L 1/10

(54) **SENSOR FOR NON-CONTACTING DETECTION VIA MODULATION OF ELECTROMAGNETIC SIGNAL THROUGH BY MEASUREMENT ENTITY CONTROLLED MECHANICAL RESONANCE**
SENSOR FÜR DIE KONTAKTLOSE DETEKTION ÜBER MODULATION EINES ELEKTROMAGNETISCHEN SIGNALS DURCH MESSENTITÄTSGESTEUERTE MECHANISCHE RESONANZ
DETECTEUR PERMETTANT LA DETECTION SANS CONTACT PAR MODULATION D'UN SIGNAL ELECTROMAGNETIQUE AU MOYEN D'UNE RESONANCE MECANIQUE COMMANDEE PAR UN ORGANE DE MESURE

(43) Date of publication of application: 05.02.2003
(73) Proprietor: Sondero Technologies AB, 302 41 Halmstad (SE)
(72) Inventor: Tyrén Carl, 98000 Monaco (MC)
(74) Representative: Asketorp, Göran
(86) International application number: PCT/SE1999/001000
(87) International publication number: WO 2001/073389

(56) References cited:
- JP-A- 9 010 902
- US-A- 3 914 992
- US-A- 3 960 009
- US-A- 4 521 684
- US-A- 4 977 784
- US-A- 5 747 680

## Description

### AREA OF INVENTION

The present invention relates to a method and a device for detection of a measuring quantity of an object, such as gas or liquid pressure, torque or temperature.

### BACKGROUND OF INVENTION

Contactless detection of mechanical quantities with the use of a cheap and robust sensing technique is at the present stage a neglected area. One example is the measuring of torque and tyre pressure on vehicles so as to improve safety, performance and environmental consideration.

A prior art and commercially available pressure sensor operates according to a so called "vibrating string" principle. By a trivial mechanical arrangement the pressure to measured is transformed into a corresponding mechanical tension in a string that is excited at its resonance frequency. The measuring of this resonance frequency is made locally within the cover of the pressure sensor, for instance by an induction technique.

US 4521584 discloses an instrumentation system for use in measuring and processing industrial process variables, such as flow, pressure, or temperature, includes a resonant element sensor whose resonant frequency varies in accordance with changes in the desired process variable communicating through an optical fiber link to a distant control room. The sensor is activated into resonant physical motion by light energy from a source in the control room, while the motion of the wire is sensed optically and retransmitted to the control room to produce an output signal whose frequency is equal to that of the resonating element. A feedback network maintains the sensor in resonance by synchronizing the delivery of light energy to the motion of the resonant element. The powering and sensing aspect may be performed by individual fiber optic cables or alternatively this function may be combined by utilizing a single fiber optic strand.

### DISCLOSURE OF INVENTION

An object of the invention is to solve one or several of the above-mentioned shortcomings in the prior art.

In an aspect, there is provided a method for detecting a measuring quantity of an object, characterised in that a mechanical resonance element connected with the object is irradiated with a microwave signal, that said measuring quantity controls a mechanical resonance oscillating movement occuring in the resonance element, that the mechanical resonance oscillating movement is detected as a modulation of the microwave signal from the resonance element, and that the mechanical resonance oscillating movement is excited by naturally existing mechanical energy available in its immediate vicinity.

According to an embodiment, the measuring quantity controls a mechanical resonance frequency. The measuring quantity may be a gas or liquid pressure. Alternatively, the measuring quantity is a torque. Still alternatively, the measuring quantity is a temperature.

Accoring to another embodiment, a plurality of said measuring quantities are detected simultaneously by having non-coincident resonance frequencies controlled thereby. The intensity of the microwave signal from the mechanical resonance element is used to detect a rotation of the mechanical resonance element. Such intensity variations may be used to associate a plurality a of rotating mechanical resonance elements.

In another aspect, there is provided a device for detecting a measurement quantity of an object, charaterised in that that a microwave transmitter is arranged to irradiate a mechanical resonance element connected with said object with a microwave signal, that the mechanical resonance element is connected with said object, so that said measuring quantity controls a mechanical resonance oscillating movement occuring in said mechanical resonance element, that means are arranged for the reception of a microwave signal from said resonance element and for detection of a modulation of the received microwave signal introduced by said resonance oscillating movement, and that said resonance element is mechanically arranged to be excited by the naturally existing mechanical energy available in the immediate vicinity of said resonance element.

In an embodiment, the mechanical resonance element may have a string shape. The string-shaped element may be arranged to make a transversal resonance oscillation. The string-shaped element may be mechanically pre-stressed.

### BRIEF DESCRIPTION OF THE DRAWINGS

Embodiments of the invention are disclosed on the drawings, wherein:
Fig. 1 is a partly schematic view of a first embodiment of the invention.
Fig. 2 is a partly schematic view of a second embodiment of the invention.

### DISCLOSURE OF EMBODIMENTS

It is a fact that a microwave signal can be amplitude modulated by a mechanically oscillating object in the signal path between a transmitter and a receiver. Experiments have shown that an approximately 10 cm long guitar string in mechanical oscillation at 150 Hz will introduce an obvious amplitude modulation of a 1,3 GHz microwave signal. If the mechanical tension of the guitar string is changed to make the string oscillate at 230 Hz instead the amplitude modulation of the HF-signal will follow the change. The distance between the microwave antenna and the guitar string was in the above mentioned example approximately 5 m and the microwave power was approximately 100 mW.

If a plurality but frequency separated mechanical resonances are made to oscillate at the same time, for instance by playing a chord on a guitar all these frequencies appear at the same time in the spectrum of the amplitude modulated HF signal.

These physical effects form a basis for a contactless and simultaneous detection of a plurality of sensors of the same or different measuring quantities.

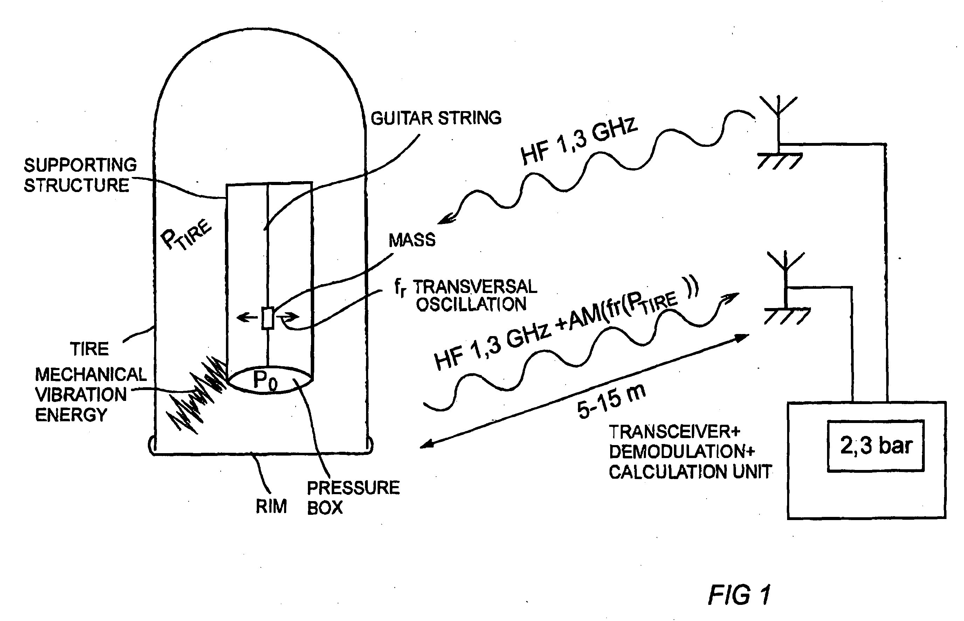

By combining a mechanical HF modulation and the prior art "vibrating string" pressure sensor principle a new pressure sensor for remote detection can be designed, that is (Fig. 1) a sensor comprising:
a pressure sensing element (such as a membrane bellows) that is connected to a mechanical resonance element, the frequency thereof thus being controlled (such as a guitar string),
a mechanical excitation signal for exciting the mechanical resonance oscillation (such as vibrations from the road surface and the motor vehicle in the tire pressure sensor application), and
a radio transceiver including an amplitude demodulator and subsequent signal transformation from AM to pressure.

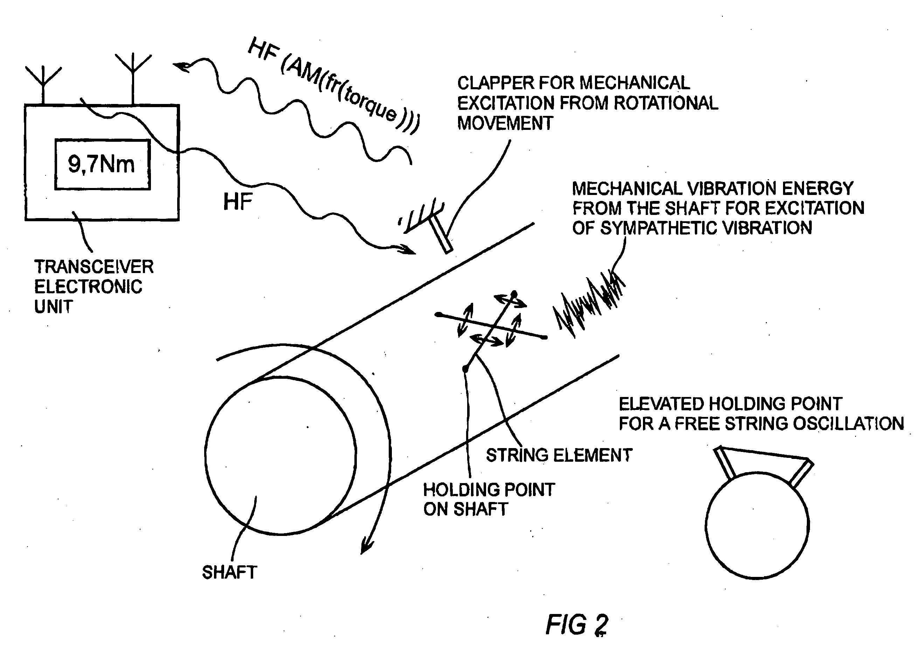

An identical method can be used also for measuring the torque (Fig. 2). A string element is provided between two locations along a main tension line on the axle, the torque of which is to be measured. The string is arranged clear from the axle surface so that it can be brought into resonance oscillation - for instance by naturally occurring vibrations in the axle or by a strike excitation from the rotation of the axle.

The string is mechanically biased so as to increase or decrease its resonance frequency depending on tensile stress or compressive stress along a selected line of elongation.

By arranging a plurality of strings on the same axle in different elongation directions and tuned to different frequency bands (by giving them different length, biasing level, load from weight, etc.) the complete mechanical strain condition of the axle can be detected without contact and at a considerable distance.

By using an element, the mechanical shape thereof changing in dependence of its temperature, and by connecting it for the control of a mechanical resonance frequency in accordance with the above described method also a telemetric temperature sensor can be designed in accordance with the above described new principle.

Measuring and monitoring mechanical vibrations is a considerable technical field. In this area the new radio technique provides a great variety of possibilities. A vibrating object can be irradiated directly with electromagnetic signals and the modulation produced by the mechanical motion can be analysed. As an alternative for instance antenna like wire elements can be arranged on a vibrating structure in specifically interesting measuring points.

An acoustic signal setting a simple membrane to oscillate will provide in accordance with the new principle a microphone function per se.

With regard to string instruments, again as an example a guitar, there is provided a new method for a transform from a mechanical/acoustic to an electric signal for further processing and distribution in sound-signal systems.

In for instance applications involving torque and tire pressure measuring a further effect can be used for the purpose of improving the detecting reliability and to obtain further information such as the rotation speed and angular motion. When the oscillating string in the sensor is made also to rotate the antenna aspect with regard to transmitting/receiving antennas of the detecting system will be changed, which will result in a superposition modulation of the total strength in the electromagnetic signal from the oscillating string. This will mean that the spectral line from the string in the amplitude modulated spectrum of the HF signal, the position of the frequency thereof corresponding to a specific tire pressure or torque, now will vary in strength depending on the rotation of the sensor. As a result also information about for instance the rotation speed and angular motion of the tire. This information can be used to discriminate tire signals originating from the associated car (which normally all are rotationally synchronised) from signals originating from other vehicles that are provided with the same type of measuring system for tire pressure measuring and that are close by.

A further development and analysis of the new principle described above and the use of it in a measuring system is of course possible and is considered within the scope of the present invention as defined by the appended claims.

## Claims

1. A method for detecting a measuring quantity of an object,
**characterised in**
**that** a mechanical *resonance* element *connected with the object* is irradiated with a microwave signal,
**that** said measuring quantity controls a mechanical *resonance* oscillating movement occuring in the *resonance* element,
**that** the mechanical *resonance* oscillating movement is detected as a modulation of the microwave signal from the *resonance* element, *and*
**that** the mechanical *resonance* oscillating movement is excited by naturally existing mechanical energy available in its immediate vicinity.

2. A method according to claim 1, **characterised in that** said measuring quantity controls a mechanical resonance frequency.

3. A method according to claim 1 and 2, **characterised in that** said measuring quantity is a gas or liquid pressure.

4. A method according to claim 1 and 2, **characterised in that** said measuring quantity is a torque.

5. A method according to claim 1 and 2, **characterised in that** said measuring quantity is a temperature.

6. A method according to claim 1 and 2, **characterised in that** a plurality of said measuring quantities are detected simultaneously by having non-coincident resonance frequencies controlled thereby.

7. A method according to claim 1, **characterised in that** variations in the intensity of the microwave signal from the mechanical *resonance* element is used to detect a rotation of the mechanical *resonance* element.

8. A method according to claim 1 and 7, **characterised in that** such intensity variations are used to associate a plurality a of rotating mechanical *resonance* elements.

9. A device for detecting a measurement quantity of an object,
**characterised in**
**that** a microwave transmitter is arranged to irradiate a
mechanical *resonance* element *connected with said object* with a microwave signal,
**that** the mechanical *resonance* element is connected with said object, so that said measuring quantity controls a
mechanical *resonance* oscillating movement *occuring in said mechanical resonance element,*
**that** means are arranged for the reception of a microwave signal from said *resonance* element and for detection of a
modulation of the received microwave signal *introduced by said resonance oscillating movement, and*
**that** said *resonance* element is mechanically arranged to be excited by the naturally existing mechanical energy available in the immediate vicinity of said *resonance* element.

10. A device according to claim 9, where said mechanical *resonance* element has a string shape.

11. A device according to claim 10, where said string-shaped element is arranged to make a transversal resonance oscillation.

12. A device according to claim 9, where the string-shaped element is mechanically pre-stressed.

## Patentansprüche

1. Verfahren zur Erfassung einer Messgröße eines Objektes, **dadurch gekennzeichnet, dass** ein mit dem Objekt verbundenes mechanisches Resonanzelement mit einem Mikrowellensignal bestrahlt wird, die Messgröße eine im Resonanzelement auftretende mechanische Resonanzoszillationsbewegung steuert, die mechanische Resonanzoszillationsbewegung als Modulation des Mikrowellensignals vom Resonanzelement erfasst wird und die mechanische Resonanzoszillationsbewegung durch in seiner unmittelbaren Nähe verfügbare, natürlich existierende mechanische Energie erregt wird.

2. Verfahren nach Anspruch 1, **dadurch gekennzeichnet, dass** die Messgröße eine mechanische Resonanzfrequenz steuert.

3. Verfahren nach Anspruch 1 und 2, **dadurch gekennzeichnet, dass** es sich bei der Messgröße um einen Gas- oder Flüssigkeitsdruck handelt.

4. Verfahren nach Anspruch 1 und 2, **dadurch gekennzeichnet, dass** es sich bei der Messgröße um ein Drehmoment handelt.

5. Verfahren nach Anspruch 1 und 2, **dadurch gekennzeichnet, dass** es sich bei der Messgröße um eine Temperatur handelt.

6. Verfahren nach Anspruch 1 und 2, **dadurch gekennzeichnet, dass** mehrere Messgrößen gleichzeitig erfasst werden, indem nichtkoinzidente Resonanzfrequenzen **dadurch** gesteuert werden.

7. Verfahren nach Anspruch 1, **dadurch gekennzeichnet, dass** Veränderungen in der Intensität des Mikrowellensignals vom mechanischen Resonanzelement zur Erfassung einer Rotation des mechanischen Resonanzelementes verwendet werden.

8. Verfahren nach Anspruch 1 und 7, **dadurch gekennzeichnet, dass** derartige Intensitätsveränderungen verwendet werden, um mehrere rotierende mechanische Resonanzelemente zuzuordnen.

9. Vorrichtung zur Erfassung einer Messgröße eines Objektes, **dadurch gekennzeichnet, dass** ein Mikrowellensender angeordnet ist, um ein mit dem Objekt verbundenes mechanisches Resonanzelement mit einem Mikrowellensignal zu bestrahlen, das mechanische Resonanzelement mit dem Objekt verbunden ist, so dass die Messgröße eine im mechanischen Resonanzelement auftretende mechanische Resonanzoszillationsbewegung steuert, Mittel zum Empfang eines Mikrowellensignals vom Resonanzelement und zur Erfassung einer durch die Resonanzoszillationsbewegung erzeugten Modulation des empfangenen Mikrowellensignals angeordnet sind und das Resonanzelement mechanisch angeordnet ist, um durch die in der unmittelbaren Nähe des Resonanzelementes verfügbare, natürlich existierende mechanische Energie erregt zu werden.

10. Vorrichtung nach Anspruch 9, bei welcher das mechanische Resonanzelement eine Streifenform hat.

11. Vorrichtung nach Anspruch 10, welcher das streifenförmige Element angeordnet ist, um eine transversale Resonanzoszillation auszuführen.

12. Vorrichtung nach Anspruch 9, bei welcher das streifenförmige Element mechanisch vorgespannt ist.

## Revendications

1. Procédé de détection d'une grandeur physique d'un objet, **caractérisé en ce qu'**un élément à résonance mécanique couplé à l'objet est exposé à un signal de micro-onde, **en ce que** ladite grandeur physique commande un mouvement oscillant de résonance mécanique se produisant sur l'élément à résonance, **en ce que** le mouvement oscillant de résonance mécanique est détecté sous la forme d'une modulation du signal de micro-onde à partir de l'élément à résonance, et **en ce que** le mouvement oscillant de résonance mécanique est excité par de l'énergie mécanique présente naturellement, disponible dans son environnement immédiat.

2. Procédé selon la revendication 1, **caractérisé en ce que** ladite grandeur physique commande une fréquence de résonance mécanique.

3. Procédé selon les revendications 1 et 2, **caractérisé en ce que** ladite grandeur physique est une pression de gaz ou de liquide.

4. Procédé selon les revendications 1 et 2, **caractérisé en ce que** ladite grandeur physique est un couple.

5. Procédé selon les revendications 1 et 2, **caractérisé en ce que** ladite grandeur physique est une température.

6. Procédé selon les revendications 1 et 2, **caractérisé en ce qu'**une pluralité desdites grandeurs physiques est détectée simultanément lorsque des fréquences de résonance ne coïncidant pas sont ainsi commandées.

7. Procédé selon la revendication 1, **caractérisé en ce que** des variations sur l'intensité du signal de micro-onde à partir de l'élément à résonance mécanique sont utilisées afin de détecter une rotation de l'élément à résonance mécanique.

8. Procédé selon les revendications 1 et 7, **caractérisé en ce que** de telles variations d'intensité sont utilisées afin d'associer une pluralité d'éléments à résonance mécanique tournants.

9. Dispositif de détection d'une grandeur physique d'un objet, **caractérisé en ce qu'**un émetteur de micro-onde est agencé afin d'exposer un élément à résonance mécanique couplé audit objet à un signal de micro-onde, **en ce que** l'élément à résonance mécanique est couplé audit objet, de telle sorte que ladite grandeur physique commande un mouvement oscillant de résonance mécanique se produisant sur ledit élément à résonance mécanique, **en ce que** des moyens sont agencés afin d'assurer la réception d'un signal de micro-onde à partir dudit élément à résonance et la détection d'une modulation du signal de micro-onde reçu introduit par ledit mouvement oscillant de résonance, et **en ce que** ledit élément à résonance est agencé mécaniquement de manière à être excité par de l'énergie mécanique présente naturellement, disponible dans l'environnement immédiat dudit élément à résonance.

10. Dispositif selon la revendication 9, dans lequel ledit élément à résonance mécanique présente une forme de chaîne.

11. Dispositif selon la revendication 10, dans lequel ledit élément en forme en chaîne est agencé de manière à présenter une oscillation de résonance transversale.

12. Dispositif selon la revendication 9. dans lequel ledit élément en forme en chaîne est précontraint mécaniquement.
